(19) **Europäisches Patentamt**

**European Patent Office**

**Office européen des brevets**

(11) **EP 0 730 393 B1**

(12) **EUROPÄISCHE PATENTSCHRIFT**

(45) Veröffentlichungstag und Bekanntmachung des Hinweises auf die Patenterteilung:
**16.08.2001 Patentblatt 2001/33**

(51) Int Cl.⁷: **H05B 41/288**, H05B 41/38

(21) Anmeldenummer: **96102696.0**

(22) Anmeldetag: **22.02.1996**

(54) **Verfahren zum Betrieb einer Hochdruckentladungslampe**

Process for driving a high pressure discharge lamp

Procédé pour alimenter une lampe à décharge à haute pression

(84) Benannte Vertragsstaaten:
**BE DE FR GB IT NL**

(30) Priorität: **03.03.1995 DE 19507553**

(43) Veröffentlichungstag der Anmeldung:
**04.09.1996 Patentblatt 1996/36**

(73) Patentinhaber: **Patent-Treuhand-Gesellschaft für elektrische Glühlampen mbH**
**81543 München (DE)**

(72) Erfinder:
• **Osterried, Josef**
**85521 Ottobrunn (DE)**
• **Häderle, Markus**
**81669 München (DE)**
• **Hansmann, Frank**
**30890 Barsinghausen (DE)**
• **Bernitz, Franz**
**82008 Unterhaching (DE)**

(56) Entgegenhaltungen:
EP-A- 0 485 865    EP-A- 0 596 740
GB-A- 2 178 607

• **JANOS MELIS: "a power controlled current source,circuit and analysis" 13.Februar 1994 , IEEE APEC,94 , ORLANDO,FL XP002005956 * Seite 856, linke Spalte, Zeile 9 - Seite 856, rechte Spalte, Zeile 10; Abbildungen 1,2 ***

**Beschreibung**

Die Erfindung betrifft ein Verfahren zum Betrieb einer Hochdruckentladungslampe gemäß dem Oberbegriff des Patentanspruchs 1.

Eine entsprechende Schaltungsanordnung ist beispielsweise in dem Buch "Betriebsgeräte und Schaltungen für elektrische Lampen" von C.H. Sturm / E. Klein, Hrsg. Siemens AG, 6. Auflage 1992, Seite 217-218 offenbart. Diese Schaltungsanordnung umfaßt, ausgehend vom Netzspannungsanschluß, ein Funkentstörungsfilter, einen Brückengleichrichter, einen Hochsetzsteller, einen Zwischenkreiskondensator, einen Tiefsetzsteller und einen Vollbrückenwechselrichter, in den eine Halogen-Metalldampf-Hochdruckentladungslampe sowie ein Zündgerät für diese Lampe integriert sind. Die Halogen-Metalldampf-Hochdruckentladungslampe wird hier mit einem 500 Hz-Rechteckstrom betrieben. Der Hochsetzsteller gewährleistet eine sinusförmige Netzstromentnahme. Durch pulsweitenmodulierte Ansteuerung des Hochsetzstellertransistors werden die Zeiten, in denen der Transistor leitet, während einer Netzhalbwelle so gesteuert, daß die Hüllkurve des aufgenommenen Stromes sinusförmig ist. Die am Zwischenkreiskondensator anliegende Ausgangsspannung des Hochsetzstellers dient dem nachgeschalteten Tiefsetzsteller als Versorgungsspannung. Der Tiefsetzsteller ist derart aufgebaut, daß der Drain-Anschluß des zum Tiefsetzsteller gehörenden Feldeffekttransistors mit dem positiven Pol des Zwischenkreiskondensators und der Source-Anschluß mit der Lampendrossel verbunden ist, und die Anode der in den Tiefsetzsteller integrierten Freilaufdiode an Masse angeschlossen ist, während ihre Kathode mit der Lampendrossel und dem Source-Anschluß verbunden ist. Der Transistor des Tiefsetzstellers wird mittels Pulsweitenmodulationssignalen derart gesteuert, daß die elektrische Leistungsaufnahme der Lampe unabhängig von Streuungen der Netz- oder Lampenspannung konstant bleibt. Die Ausgangsspannung des Tiefsetzstellers wird der Halogen-Metalldampf-Hochdruckentladungslampe über die Transistoren des Vollbrückenwechselrichters zugeführt. Die Transistorpaare des Wechselrichters schalten mit einer niedrigen Frequenz (ca. 500 Hz) und drehen dabei die Richtung des Lampenstroms um. Dieses Umpolen der Lampenspannung bzw. des Lampenstroms verhindert, daß in der Lampe Entmischungserscheinungen und Unsymmetrien auftreten, die durch den Gleichstrombetrieb hervorgerufen werden.

Bei der oben erläuterten Schaltungsanordnung wird der Tiefsetzsteller im sogenannten Continuous-Mode betrieben. Das heißt, daß der Transistor des Tiefsetzstellers wieder eingeschaltet wird, bevor der Stromfluß durch die Freilaufdiode des Tiefsetzstellers abgeklungen ist. Der Wirkungsgrad dieser Schaltungsanordnung beträgt mit im Continuous-Mode betriebenen Tiefsetzsteller üblicherweise ca. 82 % bis 86 %.

Die Veröffentlichung von Janos Melis "A power controlled current source, circuit and analysis", 13. Februar 1994, IEEE APEC, 94, Orlando, FL XP002005956 beschreibt einen Tiefsetzsteller zum Betrieb einer Hochdruckentladungslampe, wobei der Transistor des Tiefsetzstellers im Nulldurchgang des Stroms der Tiefsetzstellerinduktivität geschaltet wird.

Die europäische Offenlegungsschrift EP 0 596 740 A1 offenbart ein Verfahren zur Leistungsregelung einer Hochdruckentladungslampe an einer geregelten Gleichspannung unter Verwendung eines ersten Fehlersignals, das proportional zur Differenz eines dynamischen, im wesentlichen zum Lampenstrom proportionalen Signals und eines Referenzsignals für den Lampenstrom ist, und eines zweiten Fehlersignals, das proportional zur Differenz eines dynamischen, im wesentlichen zur geregelten Gleichspannung proportionalen Signals und eines zur Lampenleistung korrespondierenden Referenzsignals ist.

Die britische Offenlegungsschrift GB 2 178 607 A beschreibt den Hochfrequenzbetrieb einer Entladungslampe an einem Vollbrückenwechselrichter. Die Hochfrequenzkomponente des Lampenstroms wird mittels eines parallel zur Entladungslampe angeordneten Kondensators überbrückt. In Serie zur Entladungslampe und parallel zu dem Kondensator ist eine Induktivität geschaltet. Dadurch wird die Entionisation der Lampe verzögert.

Die europäische Offenlegungsschrift EP 0 485 865 A1 offenbart eine Schaltungsanordnung zum Betrieb einer Entladungslampe, das aus einem Schaltnetzteil und einer Steuerschaltung besteht. Das Schaltnetzteil weist einen Spannungssensor auf, der dafür sorgt, dass der Transistor des Schaltnetzteil genau zu dem Zeitpunkt eingeschaltet wird, wenn die in der Induktivität des Schaltnetzteils gespeicherte Energie abgeflossen ist.

Es ist die Aufgabe der Erfindung, ein Verfahren zum Betrieb einer Hochdruckentladungslampe mit einem verbesserten Wirkungsgrad bereitzustellen.

Diese Aufgabe wird erfindungsgemäß durch die kennzeichnenden Merkmale des Patentanspruches 1 gelöst.

Beim erfindungsgemäßen Betriebsverfahren wird der Tiefsetzsteller nach Beendigung der Lampenanlaufphase nicht im Continuous-Mode, sondern im Discontinuous-Mode betrieben. Das heißt, der Schalttransistor des Tiefsetzstellers wird erst dann wieder in den niederohmigen Zustand versetzt, wenn der Stromfluß durch die dazugehörende, in den Tiefsetzsteller integrierte Freilaufdiode auf Null abgesunken ist. Durch diese Betriebsweise entstehen, unabhängig von der verwendeten Freilaufdiode, keine Schaltverluste im Transistor. Außerdem sind der Feldeffekttransistor und die Freilaufdiode des Tiefsetzstellers erfindungsgemäß derart verschaltet, daß der Source-Anschluß mit dem negativen Pol des Zwischenkreiskondensators verbunden ist und die Kathode der Freilaufdiode am postiven Pol des Zwischenkreiskondensators angeschlossen ist. Durch diese Maßnahme vereinfacht sich die Ansteuerung des Feldeffekttransistors, weil diese nun nicht mehr, beispielsweise mittels eines Transformators, potentialfrei ausgeführt werden muß. Die erfindungsgemäße Betriebsweise verbessert den Wirkungsgrad der Schaltungsanordnung auf einen Wert oberhalb von 90 %. Während der Anlaufphase der Hochdruckentladungslampe wird der Tiefsetzsteller vorteilhafterweise im Continuous-Mode betrieben. Dadurch kann ein wesentlich höherer Lampenstrom erzeugt werden und die Anlaufphase der Lampe verkürzt werden. Unter dem Begriff Anlaufphase versteht man den Zeitraum, den die Entladungslampe nach erfolgter Zündung durchläuft, bevor sie ihren stabilen Betriebszustand erreicht hat. Während der Anlaufphase verdampfen die an der Entladung teilhabenden Füllungskomponenten und ihre Dampfdrücke streben einem neuen Gleichgewichtswert zu. Außerdem steigt der Lichtstrom der Lampe während der Anlaufphase auf seinen Maximalwert an.

Nachstehend wird die Erfindung anhand eines bevorzugten Ausführungsbeispiels näher erläutert. Es zeigen:

Figur 1    Ein Blockschaltbild der Schaltungsanordnung zur Durchführung des erfindungsgemäßen Verfahrens

Figur 2    Einzelheiten des Tiefsetzstellers der erfindungsgemäßen Schaltungsanordnung

Figur 3    Den Stromverlauf durch die in den Tiefsetzsteller TS integrierte Lampendrossel LD nach Beendigung der Anlaufphase der Hochdruckentladungslampe LP: Discontinuous-Mode-Betrieb des Tiefsetzstellers

Figur 4    Den Stromverlauf durch die in den Tiefsetzsteller TS integrierte Lampendrossel LD während der Anlaufphase der Hochdruckentladungslampe LP: Continuous-Mode-Betrieb des Tiefsetzstellers

Die Schaltungsanordnung gemäß eines bevorzugten Ausführungsbeispiels besteht, ausgehend vom Netzspannungsanschluß, aus einem Funkentstörungsfilter FE, einem Netzspannungsgleichrichter GL, einem Hochsetzsteller HS, einem Zwischenkreiskondensator C1, einem Tiefsetzsteller TS und einem Vollbrückenwechselrichter WR, an den eine Hochdruckentladungslampe LP mit Zündvorrichtung ZE angeschlossen ist. Die Schalttransistoren T3, T6; T4, T5 des Wechselrichters WR werden mittels eines Generators RG, der eine niederfrequente Rechteckspannung von ca. 120 Hz erzeugt, angesteuert, so daß durch die Lampe LP ein Rechteckstrom derselben Frequenz fließt.

Das mit dem Netzeingang verbundene Funkentstörungsfilter FE besteht in bekannter Weise aus einer nicht-stromkompensierten und einer stromkompensierten Filterdrossel mit jeweils zwei Wicklungsblöcken, wobei in jede Netzzuleitung jeweils ein Wicklungsblock integriert ist, sowie aus zwei Filterkondensatoren. Diese beiden Kondensatoren sind mit den Filterdrosseln derart verschaltet, daß sich vom Netzeingang her die übliche Anordnung eines LC-Tiefpaßfilters ergibt.

Der dem Brückengleichrichter GL nachgeschaltete Hochsetzsteller HS arbeitet als Sinusstromregler. Mit Hilfe einer Sinusstromkontrolleinheit SV und einer Pulsweitenmodulationseinheit P1 werden die Zeiten, in denen der Transistor T1 des Hochsetzstellers HS niederohmig ist, während einer Netzhalbwelle derart gesteuert, daß die Hüllkurve des aufgenommen Stromes sinusförmig ist. Die Pulsweitenmodulationseinheit P1 arbeitet mit mittelfrequenten Steuersignalen von ca. 50 kHz. Eine derartige Ansteuerung des Hochsetzstellers HS ist beispielsweise in der europäischen Offenlegungsschrift EP-A 485 865 beschrieben.

Am Zwischenkreiskondensator C1 liegt die Ausgangsspannung des Hochsetzstellers HS an, die je nach Höhe der Netzspannung zwischen 285 V bis 440 V beträgt. Als Zwischenkreiskondensator C1 wird ein Elektrolytkondensator hoher Kapazität verwendet. Er versorgt den nachgeschalteten Tiefsetzsteller TS und den Wechselrichter WR während des Netzspannungsnulldurchganges mit Energie. Der Tiefsetzsteller TS wird mit Hilfe einer weiteren Pulsweitenmodulationseinheit P2 und einer Leistungsregelungseinheit PE so gesteuert, daß die Lampenleistung unabhängig von Streuungen der Netzspannung und der Lampenspannung konstant bleibt. Die Pulsweitenmodulationseinheit P2 arbeitet mit Steuersignalen oberhalb von 20 kHz. Die am Kondensator C2 anliegende Ausgangsspannung des Tiefsetzstellers TS dient dem Wechselrichter WR als Eingangsspannung. Die Transistorpaare T3, T6 und T4, T5 werden vom Rechteckgenerator RG abwechselnd niederohmig gesteuert, so daß durch die Lampe LP ein im wesentlichen rechteckförmiger Strom mit einer Frequenz von ca. 120 Hz fließt. Das Grundprinzip eines Vollbrückenwechselrichters ist beispielsweise in dem Buch "Getaktete Stromversorgung: Grundlagen Applikationen" von J. Beckmann, FRANZIS Arbeitsbuch 1990, auf der Seite 32 beschrieben.

Eine umfangreiche Kontrolleinheit TI überwacht den ordnungsgemäßen Betrieb der Hochdruckentladungslampe LP. Diese Kontrolleinheit TI umfaßt einen Zeitgeber zur Steuerung von Zeitabläufen sowie Überwachungsschaltungen, die den Spannungsabfall am Tiefsetzstellerausgangskondensator C2 während des Lampenbetriebes überwachen und die Ansteuerungsvorrichtungen P1, P2 des Hochsetzstellers HS bzw. des Tiefsetzstellers TS bei nicht ordnungsgemäßem Betrieb stillegen.

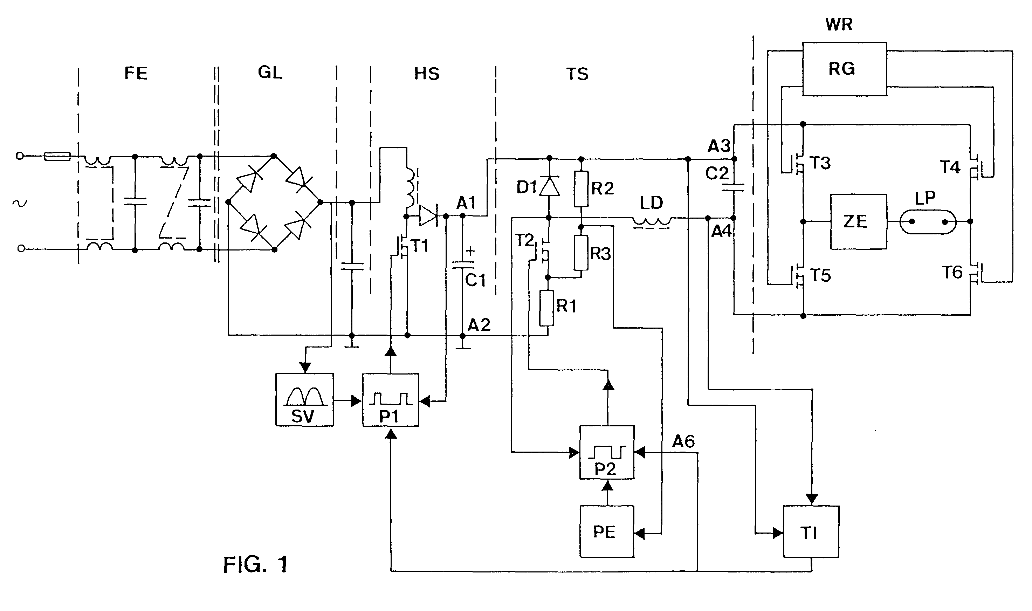

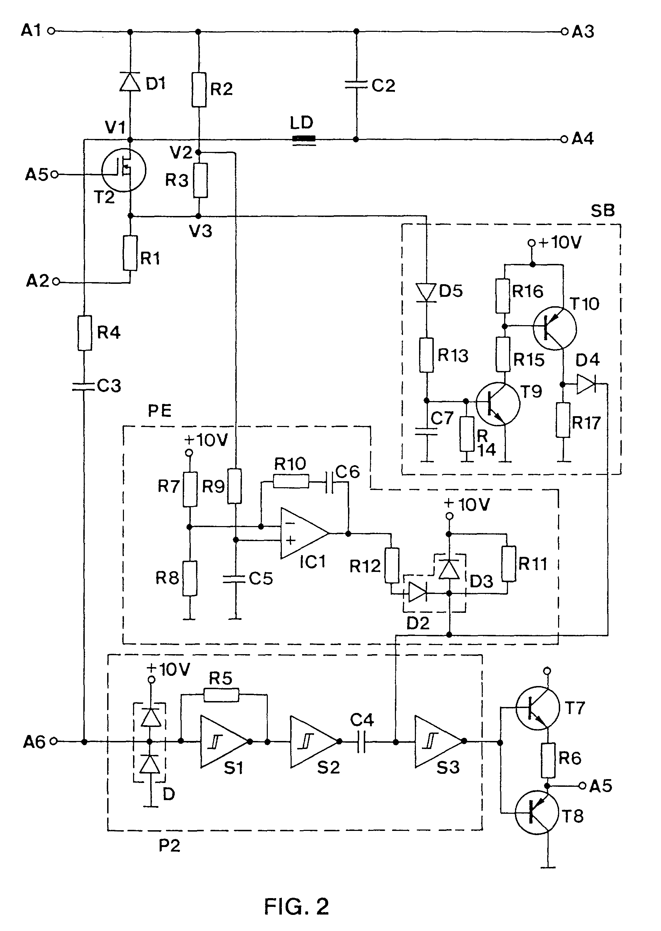

In Figur 2 sind Einzelheiten des Tiefsetzstellers TS und seiner Ansteuerung abgebildet. Der Tiefsetzsteller TS besteht im wesentlichen aus einem Feldeffekttransistor T2, einer Freilaufdiode D1, einer Lampendrossel LD und einem Ausgangskondensator C2. Zwecks einer übersichtlichen Darstellung wurden in den Figuren 1 und 2 Anschlüsse A1 bis A6 eingeführt. Sie veranschaulichen die Vernetzung des in der Figur 2 abgebildeten Tiefsetzstellers TS mit den anderen Komponenten der erfindungsgemäßen Schaltungsanordnung. Der Source-Anschluß des Feldeffekttransistors T2 ist über einen ohmschen Widerstand R1 zum Minuspol des Zwischenkreiskondensators C1 geführt, während sein Drain-Anschluß mit der Anode der Freilaufdiode D1 und mit der Lampendrossel LD verbunden ist. Die Kathode der Freilaufdiode D1 ist an den Pluspol des Zwischenkreiskondensators C1 und an einen Anschluß des Ausgangskondensators C2 angeschlossen. Der andere Anschluß des Ausgangskondensators C2 ist mit der Lampendrossel LD verbunden, so daß die Freilaufdiode D1, der Kondensator C2 und die Lampendrossel LD einen geschlossenen Stromkreis bilden. Parallel zur Serienschaltung von Freilaufdiode D1 und Drain-Source-Strecke des Transistors T2 ist ein Spannungsteiler geschaltet, der aus den ohmschen Widerständen R2, R3 besteht. Ein zwischen dem Drain des Transistors T2, der Anode der Freilaufdiode D1 und der Lampendrossel LD lokalisierter Abgriff V1 ist über ein RC-Glied R4, , C3 mit dem Eingang der Pulsweitenmodulationseinheit P2 verbunden. Der Ausgang der Pulsweitenmodulationseinheit P2 ist über einen Totem-Pol-Verstärker T7, T8, R6 zum Gate-Anschluß des Transistors T2 geführt. Die Pulsweitenmodulationseinheit P2 umfaßt eine Spannungsbegrenzungseinheit D, drei Schmitt-Trigger S1, S2, S3, einen Kondensator C4 und einen ohmschen Widerstand R5, der den Eingang des ersten Schmitt-Triggers S1 zu seinem Ausgang rückkoppelt. Der Kondensator C4 ist zwischen dem Ausgang des zweiten S2 und dem Eingang des dritten Schmitt-Triggers S3 angeordnet. Die Pulsweitenmodulationseinheit P2 des Tiefsetzstellers TS stimmt, abgesehen von der Dimensionierung der einzelnen Bauteile, mit der Pulsweitenmodulationseinheit P1 des Hochsetzstellers HS überein.

Ein Abgriff V2 zwischen den Spannungsteilerwiderständen R2, R3 ist mit dem Eingang der Leistungsregelungseinheit PE verbunden. Der Ausgang der Leistungsregelungseinheit PE ist an den Kondensator C4 und an den Eingang des dritten Schmitt-Triggers S3 der Pulsweitenmodulationseinheit P2 angeschlossen. Die Leistungsregelungseinheit PE besteht aus einem Operationsverstärker IC1, Kondensatoren C5, C6, ohmschen Widerständen R7, R8, R9, R10, R11, R12 und Dioden D2, D3. Die Spannungsteilerwiderstände R7, R8 erzeugen zusammen mit einer Hilfsspannung eine Referenzspannung für den invertierenden Eingang des Operationsverstärkers IC1, der außerdem mittels des RC-Gliedes R10, C6 zu seinem Ausgang rückgekoppelt ist. Der nicht-invertierende Eingang des Operationsverstärkers IC1 ist über den Widerstand R9 mit dem Abgriff V2 verbunden. Eine ausführliche Beschreibung der Leistungsregelungseinheit PE findet man in dem Patent US 5,198,728.

Die Ansteuerung des Tiefsetzstellers TS umfaßt auch eine Strombegrenzungseinheit SB, die an einen Abgriff V3 zwischen den Spannungsteilerwiderständen R1, R3 angeschlossen ist und in Figur 1 der Übersichtlichkeit halber nicht abgebildet ist. Die Strombegrenzungseinheit SB besteht aus zwei Bipolartransistoren T9, T10, zwei Dioden D4, D5, einem Kondensator C7 und den Widerständen R13 bis R17. Der Ausgang der Strombegrenzungseinheit SB ist mit dem Kondensator C4 und dem Eingang des dritten Schmitt-Triggers S3 der Pulsweitenmodulationseinheit P2 verbunden. Tabelle I enthält Angaben zur Dimensionierung der elektronischen Bauelemente des Tiefsetzstellers TS der erfindungsgemäßen Schaltungsanordnung zum Betrieb einer 150 W-Metallhalogenid-Hochdruckentladungslampe.

Solange der Transistor T2 des Tiefsetzstellers TS eingeschaltet ist - das bedeutet eine niederohmige Drain-Source Strecke - fließt, ausgehend vom Zwischenkreiskondensators C1, über den Ausgangskondensator C2 des Tiefsetzstellers TS durch die Lampendrossel LD und über den Source-Widerstand R1 ein linear ansteigender Strom. Bei ausgeschaltetem Transistor T2 - hochohmige Drain-Source Strecke - baut sich das in der Drossel LD gespeicherte Magnetfeld ab und sorgt für einen linear abnehmenden Stromfluß durch die Lampendrossel LD und durch die Freilaufdiode D1. Der Tiefsetzsteller TS wird mit Hilfe der Schaltungskomponenten PE, P2 auf konstante Ausgangsleistung und damit auf konstante Lampenleistung geregelt. Dazu wird das Tastverhältnis des Transistors T2 mittels der Pulsweitenmodulationseinheit P2 und der Leistungsregelungseinheit PE entsprechend gesteuert.

Zur Festlegung des Einschaltzeitpunktes des Transistors T2 detektiert die Pulsweitenmodulationseinheit P2 über das RC-Glied R4, C3 den Nulldurchgang des Lampendrosselstromes. Die Leistungsregelungseinheit PE überwacht an ihrem Eingang - nicht-invertierenden Eingang des Operationsverstärkers IC1 - den Spannungsabfall über die in Serie geschalteten Widerstände R1 und R3. Da der Widerstand R1 vom Lampendrosselstrom durchflossen wird, ist sein Spannungsabfall proportional zum Lampendrosselstrom. Der Spannungsabfall am Widerstand R3 ist hingegen proportional zu der am Kondensator C2 anliegenden Ausgangsspannung U2 des Tiefsetzstellers TS. Die ohmschen Widerstände R1 bis R3 sind so dimensioniert, daß im Arbeitspunkt der Leistungsregelungseinheit PE der Spannungsabfall über den Widerständen R1 und R3 gleich sind, so daß Spannungs- und Stromsignal gleichermaßen für die Leistungsregelung der Lampe LP ausgenutzt werden. Der Spannungsabfall über den Widerständen R1, R3, der im Arbeitspunkt der Leistungsregelungseinheit PE proportional zur Lampenleistung ist, wird von dem Operationsverstärker IC1 mit dem vom Spannungsteiler R7, R8 und einer Hilfsspannungsquelle erzeugten Referenzspannung verglichen. Die Ausgangsspannung des Operationsverstärkers IC1 bzw.

der Leistungsregelungseinheit PE wird dem Kondensator C4 der Pulsweitenmodulationseinheit P2 zugeführt und beeinflußt dessen Ladezustand.

Die Strombegrenzungseinheit SB überwacht an ihrem Eingang, der mit dem Abgriff V3 verbunden ist, den Spannungsabfall an dem vom Lampendrosselstrom durchflossenen Source-Widerstand R1. Überschreitet der Lampendrosselstrom den zulässigen Maximalwert, so schalten die Transistoren T9, T10 durch und veranlassen die Pulsweitenmodulationseinheit P2 über die Verbindung zum Kondensator C4 dazu, den Tiefsetzstellertransistor T2 abzuschalten.

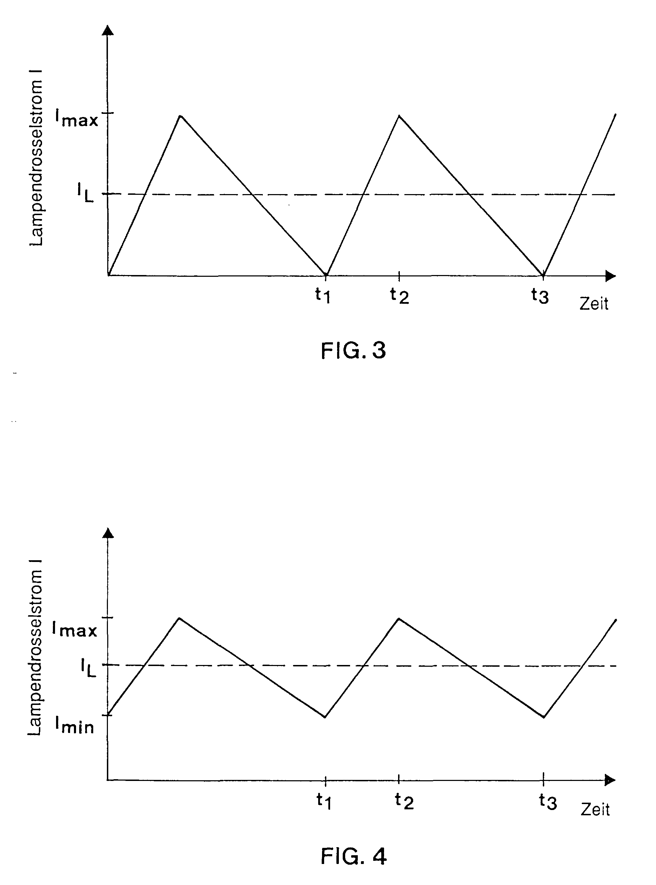

Nach Beendigung der Zünd- und Anlaufphase, das heißt, nachdem die Lampe LP bzw. die Betriebsparameter der Lampe LP einen stabilen Gleichgewichtszustand angenommen haben, arbeitet der Tiefsetzsteller TS im sogenannten Discontinuous-Mode (Fig. 3). Das bedeutet, daß der Transistor T2 erst dann wieder eingeschaltet wird, wenn der Strom durch die Lampendrossel LD auf Null abgesunken ist. Der Nulldurchgang des Lampendrosselstromes wird der Pulsweitenmodulationseinheit P2 über das RC-Glied R4, C3 mitgeteilt. Bei entmagnetisierter Lampendrossel LD erniedrigt sich das Potential am Verbindungspunkt V1 und erzeugt mittels des RC-Gliedes R4, C3 ein Low-Eingangssignal am Schmitt-Trigger S1. Am Ausgang von S1 und am Eingang des Schmitt-Triggers S2 liegt somit ein High-Signal an, das vom Schmitt-Trigger S3 wieder in ein Low-Signal invertiert wird, so daß, nach nochmaliger Inversion durch den Schmitt-Trigger S3, am Gate des Transistors T2 ein High-Signal generiert wird, das den Transistor T2 einschaltet. Die Einschaltdauer bzw. der Ausschaltzeitpunkt des Transistors T2 hängt von der Ladezeit des Kondensators C4 ab, die wiederum durch die Regelungseinheiten PE und SB beeinflußt wird. Liegt am Kondensator C4 ein High-Potential an, so wird am Ausgang des Schmitt-Triggers S3 ein Low-Signal erzeugt und der Tiefsetzstellertransistor T2 ausgeschaltet. Die Ausschaltdauer des Transistors T2 wird von der Pulsweitenmodulationseinheit P2 nicht geregelt. Sie hängt von der Entmagnetisierung der Lampendrossel LD ab. Die maximale Ausschaltdauer wird durch den ohmschen Widerstand R5 allerdings auf ca. 30 μs begrenzt, so daß die niedrigste Taktfrequenz des Tiefsetzstellers TS ca. 30 kHz beträgt. Detektiert das RC-Glied R4, C3 innerhalb von 30 μs keinen Nulldurchgang des Lampendrosselstromes, so wird der Ausgang des Schmitt-Triggers S1, der über den Widerstand R12 zu seinem Eingang rückgekoppelt ist, mittels dieser Rückkopplung auf "High" gesetzt und dadurch der Transistor T2 wieder eingeschaltet, obwohl der Drosselstrom noch nicht auf Null abgesunken ist.

Figur 3 zeigt schematisch die zeitliche Abhängigkeit des Stromverlaufs durch die Lampendrossel LD nach Beendigung der Anlaufphase der Hochdruckentladungslampe LP. Zum Zeitpunkt $t_1$ ist der Lampendrosselstrom I auf Null abgesunken und die Pulsweitenmodulationseinheit P2 schaltet den Transistor T2 erneut ein. Der Lampendrosselstrom I steigt dann bis zum Ausschaltzeitpunkt $t_2$ des Transistors T2 linear auf einen Maximalwert $I_{max}$ an, der üblicherweise unterhalb der Abschaltschwelle der Strombegrenzungseinheit SB von 5,5 A liegt. Die Einschaltdauer $t_2$-$t_1$ hängt von der Leistungsregelung ab. Sie berechnet sich aus dem Spannungsabfall $U_1$ am Zwischenkreiskondensator C1, dem Spannungsabfall $U_2$ am Kondensator C2, der Induktivität L der Lampendrossel LD und dem Maximalwert des Lampendrosselstromes $I_{max}$ zu:

$$t_2 - t_1 = \frac{I_{max}\ L}{U_1 - U_2} \qquad (1)$$

Bei ausgeschaltetem Transistor T2 nimmt der Lampendrosselstrom I linear ab und erreicht zum Zeitpunkt $t_3$ den Wert Null. Die Ausschaltdauer $t_3$-$t_2$ des Transistors T2 berechnet sich zu:

$$t_3 - t_2 = \frac{I_{max}\ L}{U_2} \qquad (2)$$

Der Betrag des mittleren Lampenstromes $I_L$ ist nach Beendigung der Anlaufphase halb so groß wie der oben erwähnte Maximalwert $I_{max}$ des Lampendrosselstromes:

$$I_L = \frac{I_{max}}{2} \qquad (3)$$

Die Richtung des Lampenstromes wechselt allerdings im 120 Hz-Schalttakt des Wechselrichters WR.

Figur 4 zeigt den Stromverlauf durch die Lampendrossel LD während der Anlaufphase der Hochdruckentladungslampe. Der Tiefsetzsteller arbeitet während der Anlaufphase im sogenannten Continuous-Mode, das heißt, daß der Transistor T2 bereits wieder eingeschaltet wird, bevor der Lampendrosselstrom auf Null abgesunken ist. Diese Betriebsweise hat den Vorteil, daß dadurch der Lampe während der Anlaufphase, im Vergleich zum Discontinuous-Mode-Betrieb, ein höherer mittlerer Strom bereitgestellt wird, so daß die Dauer der Anlaufphase verkürzt wird. Der Betrag des mittleren Lampenstromes $I_L$ während der Anlaufphase berechnet sich zu:

$$I_L = \frac{I_{max} + I_{min}}{2} \qquad (4)$$

Mit $I_{min}$ wird die Stromstärke des zum Wiedereinschaltzeitpunkt $t_3$ des Transistors T2 noch vorhandenen Reststroms durch die Lampendrossel LD bezeichnet.

Die Tiefsetzstellerausgangsspannung $U_2$ be-

trägt während der Anlaufphase nur ca. 15 V bis 20 V im Vergleich zu etwa 50 V bis 130 V am Ende der Anlaufphase. Gemäß der Gleichung (2) hätte diese vergleichsweise geringe Ausgangsspannung $U_2$ eine erhebliche Verlängerung der Ausschaltdauer des Transistors T2 zur Folge. Da die Ausschaltdauer des Transistors T2 aber durch den Widerstand R5 auf maximal 30 µs begrenzt ist, wird der Transistor T2 von der Pulsweitenmodulationseinheit P2 bereits wieder eingeschaltet, bevor der Lampendrosselstrom vollständig abgeklungen ist. Der Tiefsetzsteller TS arbeitet also im Continuous-Mode-Betrieb (Fig. 4). Der Übergang vom Continuous-Mode-Betrieb zum Discontinuous-Mode-Betrieb des Tiefsetzstellers TS erfolgt stetig.

Die Erfindung beschränkt sich nicht auf das oben näher erläuterte Ausführungsbeispiel. Beispielsweise funktioniert das erfindungsgemäße Betriebsverfahren auch bei Schaltungsanordnungen ohne Hochsetzsteller HS.

Tabelle I

| | |
|---|---|
| R1 | 0,25 Ω |
| R2, R5 | 2,2 MΩ |
| R3 | 560 Ω |
| R4, R11 | 100 kΩ |
| R6 | 10 Ω |
| R12 | 3,3 kΩ |
| R9, R10 | 10 kΩ |
| R7 | 56 kΩ |
| R8 | 1,3 kΩ |
| R13, R17 | 470 Ω |
| R14 | 4,7 kΩ |
| R16 | 1 kΩ |
| R15 | 2,2 kΩ |
| C1 | 22 µF |
| C2 | 1 µF |
| C3 | 10 pF |
| C4, C7 | 470 pF |
| C5, C6 | 10 nF |
| T2 | IRF840FI |
| T7, T9 | BC817-40 |
| T8, T10 | BC807-40 |
| S1, S2, S3 | 40106 |
| D1 | STTB506F |

**Patentansprüche**

1. Verfahren zum Betrieb einer Hochdruckentladungslampe mit einer Schaltungsanordnung, die folgende Bauelemente enthält:

   - ein Funkentstörungsfilter (FE), dessen Eingang mit einer elektrischen Spannungsquelle verbunden ist,

   - einen Zwischenkreiskondensator (C1),
   - einen Tiefsetzsteller (TS), dessen Eingang parallel zum Zwischenkreiskondensator (C1) geschaltet ist,
   - einen Wechselrichter (WR), an dessen Ausgangskreis eine Hochdruckentladungslampe (LP) angeschlossen ist, und dessen Eingang mit dem Ausgang des Tiefsetzstellers (TS) verbunden ist,

   dadurch gekennzeichnet, daß der Tiefsetzsteller (TS) während der Anlaufphase der Hochdruckentladungslampe (LP) im Continuous-Mode und nach Beendigung der Anlaufphase der Hochdruckentladungslampe (LP) im Discontinuous-Mode betrieben wird.

**Claims**

1. Method for operating a high-pressure discharge lamp bearing a circuit arrangement which includes the following components:

   - a radio interference suppression filter (FE) whose input is connected to an electric voltage source,
   - an intermediate circuit capacitor (C1),
   - a buck converter (TS) whose input is connected in parallel with the intermediate circuit capacitor (C1), and
   - an inverter (WR) to whose output circuit a high-pressure discharge lamp (LP) is connected, and whose input is connected to the output of the buck converter (TS),

   characterized in that the buck converter (TS) is operated in continuous mode during the starting phase of the high-pressure discharge lamp (LP), and is operated in discontinuous mode after termination of the starting phase of the high-pressure discharge lamp (LP) .

**Revendications**

1. Procédé pour faire fonctionner une lampe à décharge à haute pression par un montage qui contient les composants suivants :

   - un filtre (FE) antiparasite dont l'entrée est reliée à une source de tension électrique,
   - un condensateur (C1) de circuit intermédiaire,
   - un montage (TS) dévolteur dont l'entrée est branchée en parallèle au condensateur (C1) de circuit intermédiaire,
   - un onduleur (WR) au circuit de sortie duquel est raccordée une lampe (LP) à décharge à haute pression et dont l'entrée est reliée à la sortie du montage (TS) dévolteur,

caractérisé en ce que l'on fait fonctionner le montage (TS) dévolteur en mode continu pendant la phase de démarrage de la lampe (LP) à décharge à haute pression et en mode discontinu après qu'il a été mis fin à la phase de démarrage de la lampe (LP) à décharge à haute pression.

FIG. 1

FIG. 2

FIG. 3

FIG. 4